# EUROPÄISCHE PATENTSCHRIFT

(11) **EP 1 817 133 B1**
(45) Veröffentlichungstag und Bekanntmachung des Hinweises auf die Patenterteilung: **16.09.2009**
(21) Anmeldenummer: 05846356.3
(22) Anmeldetag: 25.11.2005
(51) Int. Cl.: B23K 1/00, B23K 35/02

(54) **VERBINDUNGSMATERIAL ZUM POSITIONIEREN VON LOTMATERIAL MIT EINEM TRÄGERMATERIAL UND DARAUF DISKONTINUERLICH LIEGENDEM LOTFORMKÖRPER; VERFAHREN ZUR HERSTELLUNG EINES WABENKÖRPERS UNTER VERWENDUNG EINES SOLCHEN VERBINDUNGSMATERIALS**
JOINING MATERIAL FOR PLACING SOLDER MATERIAL WITH A SUPPORT MATERIAL AND A SOLDER PREFORM THAT DISCONTINUOUSLY LIES THEREUPON; METHOD FOR THE PRODUCTION OF A HONEYCOMB MEMBER BY MEANS OF SUCH A JOINING MATERIAL
MATIERE DE LIAISON PERMETTANT DE POSITIONNER UNE MATIERE DE BRASAGE DOTEE D'UNE MATIERE SUPPORT ET UN CORPS MOULE DE BRASAGE POSE EN DISCONTINU SUR CETTE DERNIERE; PROCEDE DE PRODUCTION D'UN CORPS NID D'ABEILLES A L'AIDE D'UNE TELLE MATIERE DE LIAISON

(30) Priorität: 02.12.2004 DE 102004058285
(43) Veröffentlichungstag der Anmeldung: 15.08.2007
(73) Patentinhaber: Emitec Gesellschaft für Emissionstechnologie mbH, 53797 Lohmar (DE)
(72) Erfinder: ALTHÖFER, Kait, 51674 Wiehl (DE); BRÜCK, Rolf, 51429 Bergisch Gladbach (DE)
(74) Vertreter: Rössler, Matthias
(86) Internationale Anmeldenummer: PCT/EP2005/012631
(87) Internationale Veröffentlichungsnummer: WO 2006/058666

(56) Entgegenhaltungen:
- EP-A- 0 736 677
- DE-A1- 3 312 944
- GB-A- 994 410
- US-A- 3 464 617
- US-A- 4 712 721
- US-A- 5 851 495
- US-A- 5 891 248
- US-A1- 2002 104 830
- PATENT ABSTRACTS OF JAPAN Bd. 016, Nr. 413 (C-0980), 2. September 1992 (1992-09-02) -& JP 04 141238 A (NIPPON STEEL CORP), 14. Mai 1992 (1992-05-14)

## Beschreibung

Gegenstand der vorliegenden Erfindung ist ein Verbindungsmaterial zum Positionieren von Lotmaterial auf einer metallischen Oberfläche gemäß dem Oberbegriff des Anspruchs 1 (siehe, z.B., GB 994 410) und ein Verfahren zur Herstellung eines Wabenkörpers unter Verwendung eines solchen Verbindungsmaterials (siehe Anspruch 8). Die Wabenkörper werden bevorzugt im Abgassystem von Automobilen, insbesondere als Katalysator-Trägerkörper oder Filterkörper eingesetzt.

Wabenkörper sind im Regelfall aus keramischem Material oder als metallische Wabenstruktur ausgebildet. Man unterscheidet vor allem zwei typische Bauformen für metallische Wabenkörper. Eine frühe Bauform, für die die DE 29 02 779 A1 typische Beispiele zeigt, ist die spiralige Bauform, bei der im wesentlichen eine glatte und eine gewellte Blechlage aufeinander gelegt und spiralförmig aufgewickelt werden. Bei einer anderen Bauform wird der Wabenkörper aus einer Vielzahl von abwechselnd angeordneten glatten und gewellten oder unterschiedlich gewellten Blechlagen aufgebaut, wobei die Blechlagen zunächst einen oder mehrere Stapel bilden, die dann miteinander verschlingen werden. Dabei kommen die Enden aller Blechlagen außen zu liegen und können mit einem Gehäuse oder Mantelrohr verbunden werden, wodurch zahlreiche Verbindungen entstehen, die die Haltbarkeit des Wabenkörpers erhöhen. Typische Beispiele dieser Bauformen sind in der EP 0 245 737 B1 oder der WO 90/03220 beschrieben.

Beim Aufbau des Wabenkörpers aus metallischen oder zumindest teilweise metallischen Lagen müssen diese fügetechnisch miteinander verbunden werden, um einen dauerhaltbaren Wabenkörper zu erhalten. Da im Abgassystem eines Kraftfahrzeug regelmäßig hohe Temperaturen auftreten, werden Wabenkörper regelmäßig bei hohen Temperaturen verlötet, also einem so genannten Hartlötprozess unterworfen. Im Abgassystem sind Wabenkörper hohen mechanischen Belastungen unterworfen, die einerseits auf Stößen des Automobils beruhen, die sich auch auf den Wabenkörper übertragen und die andererseits thermisch bedingt sind. Die hohen Temperaturen des Abgasstroms sowie die Pulsatilität des Abgases bewirken eine hohe mechanische Belastung des Wabenkörpers. Insbesondere bei Wabenkörpern, die als Katalysator-Trägerkörper dienen, ist diese Belastung noch dadurch vergrößert, dass die durch den auf den Katalysator-Trägerkörper aufgebrachten Katalysator katalysierten Reaktion im Regelfall exotherm ablaufen. Insgesamt ist ein Wabenkörper im Abgassystem hohen thermischen Gradienten und Transienten ausgesetzt. Dieses setzt dem Wabenkörper hohen thermischen Verformungen aus. Ist nun der Wabenkörper starr, dass heißt, sind die Lagen über den gesamten Querschnitt des Wabenkörpers über die gesamte Länge desselben in Verbindungsbereichen mit benachbarten Lagen verbunden, kommt es leicht zu thermischen Brüchen, so dass aus diesem Grund ein möglichst flexibler Wabenkörper und damit möglichst wenige Verbindungsstellen zwischen den Lagen wünschenswert ist. Andererseits bewirkt eine zu geringe Zahl von Verbindungsstellen das Auftreten von Ermüdungsbrüchen zu einem relativ frühen Zeitpunkt.

Von daher besteht die Bestrebung, die Lagen von Wabenkörper nur in bestimmten diskreten Verbindungsbereichen miteinander zu verbinden. So ist aus der DE 103 38 360 ein Verfahren bekannt, bei dem ein Bindemittel in Tropfenform nur an den Stellen der Lagen aufgetragen wird, die später miteinander verbunden werden sollen. Nachdem die Lagen gewickelt beziehungsweise gestapelt und verwunden werden, wird pulverförmiges Lot appliziert. Ein ähnliches Verfahren ist aus der EP 0 422 000 bekannt, bei dem das Bindemittel mit einem Schwamm aufgetragen und anschließend pulverförmiges Lotmaterial eingebracht wird. Aus der DE 37 11 626 wiederum ist bekannt, das Lot durch thermisches Spritzen aufzutragen. Diskrete Verbindungsstellen werden hier dadurch erreicht, dass das thermische Spritzen durch eine entsprechende Maske erfolgt. Weiterhin offenbart die DE 33 12 944 A1, dass die versetzte Belotung von Lagen eines Wabenkörpers vorteilhaft für das thermische Dehnungsverhalten ist.

Alle hier genannten Verfahren zur Aufbringung von Lot nur in diskreten Verbindungsbereichen sind relativ aufwändig, da entweder durch geeignete Maßnahmen erreicht werden muss, dass Bindemittel nur in bestimmten Bereichen auf die Lagen aufgetragen wird oder dass eine Maske entsprechend genau positioniert wird. Weiterhin ist es bekannt, Lötfolie oder Lötdraht zur Ausbildung der Lötverbindung zu verwenden. Diese bilden jeweils kontinuierliche Lötmaterialien, mit denen die Ausbildung diskreter Verbindungsbereiche nicht möglich ist.

Hiervon ausgehend liegt der vorliegenden Erfindung die Aufgabe zugrunde, ein Verbindungsmaterial vorzuschlagen, mit dem die Ausbildung diskreter Lötverbindungen zwischen zwei metallischen Strukturen ermöglicht wird. Weiterhin soll ein entsprechendes Verfahren zur Herstellung eines Wabenkörpers, ein entsprechender Wabenkörper und ein entsprechendes Kraftfahrzeug vorgeschlagen werden.

Diese Aufgabe wird gelöst durch ein Verbindungsmaterial mit den Merkmalen des Anspruchs 1 und durch ein Verfahren mit den Merkmalen des Anspruchs 8. Vorteilhafte Ausgestaltungen sind Gegenstand der jeweiligen abhängigen Ansprüche.

Das erfindungsgemäße Verbindungsmaterial zum Positionieren von Lotmaterial auf mindestens einem diskreten Verbindungsbereich einer metallischen Oberfläche, zeichnet sich dadurch aus, dass ein Lotmaterial diskontinuierlich auf einem kontinuierlichen Trägermaterial ausgebildet ist.

Ein solches Verbindungsmaterial ermöglicht in vorteilhafter Weise die Positionierung von diskreten Bereichen von Lotmaterial auf Verbindungsbereichen von metallischen Oberflächen, ohne dass beispielsweise ein Bindemittel vor Auftragen eines Lotes aufgetragen werden muss. Insbesondere kann ein solches Verbindungsmaterial mit den zu verbindenden metallischen Oberflächen aufgewickelt oder geformt werden. Hierzu kann es vorteilhaft sein, das Trägermaterial und/oder das Lotmaterial mit Bindemitteln zu versehen, die das Verbindungsmaterial an den zu verbindenden Oberflächen fixiert und so gewährleistet, dass genau definierte Verbindungsbereiche der metallischen Oberflächen mit Lotmaterial versehen und später verbunden werden können. Das Trägermaterial und/oder das Lotmaterial können Markierungen aufweisen, die eine Positionierung des Verbindungsmaterials erleichtern.

Erstmals wird hier ein kontinuierliches Material vorgeschlagen, durch welches Lotmaterial in diskontierlichen Bereichen positioniert werden kann. Bei kontinuierlichen Lotmaterialien wie beispielsweise kontinuierlicher Lötfolie ist eine gezielte Belotung und damit Verbindung diskreter Bereiche der zu verlötenden zumindest teilweise metallischen Oberfläche nicht möglich, wohingegen eine gezielte Belotung diskreter Bereiche durch Auftragen eines Bindemittels und anschließendes Auftragen von Lotmaterial aufwändig ist und insbesondere bei der Herstellung von Wabenkörpern eine hohe Präzision erfordert. Das erfindungsgemäße Verbindungsmaterial erleichtert in vorteilhafter Weise die Handhabung des Lotmaterials und vereinfacht die Herstellung von diskreten Verbindungen zwischen zumindest teilweise metallischen Oberflächen. Unter einer zumindest teilweise metallischen Oberfläche ist in diesem Zusammenhang eine Oberfläche zu verstehen, die insbesondere eine metallische oder teilweise metallische Oberfläche aufweist. Eine solche Oberfläche kann eine Blechlage darstellen, jedoch auch eine Faserlage, die auch Keramikfasern aufweisen kann. Beispielsweise stellt eine zumindest teilweise metallische Oberfläche auch eine aus Metall- und Keramikfasern gewebte Matte dar, die als Filtermatte beispielsweise in Dieselpartikelfiltern zum Einsatz kommen kann.

Bei dem erfindungsgemäßen Verbindungsmaterial ist das Lotmaterial zumindest teilweise als Lötfolie ausgebildet.

Gemäß einer weiteren vorteilhaften Ausführung des erfindungsgemäßen Verbindungsmaterials ist das Lotmaterial zumindest teilweise in Form von Lotkömen ausgebildet.

Die Ausbildung des Lotmaterials als Lötfolie ist insbesondere vorteilhaft, wenn ebene Flächen miteinander verbunden werden sollen. Ferner bietet Lötfolie den Vorteil, dass bei einer Verformung der zu verlötenden Oberflächen, bei denen beispielsweise eine Oberfläche auf der anderen Oberfläche gleitet die aus Lötfolie gebildeten Verbindungsbereiche im wesentlichen nicht verformt oder verschoben werden. Die Ausbildung des Lotmaterials aus Lotkörnern kann insbesondere dann vorteilhaft sein, wenn ein Biegen des Verbindungsmaterials beispielsweise durch Anlage an eine gekrümmte metallische Oberfläche notwendig ist. Zudem gestattet die Ausbildung des Lotmaterials aus Lotkörnern eine Anpassung insbesondere beispielsweise an die Dicke und Form der zu verlötenden Oberflächen, da je nach Dicke und Form der Oberflächen eine andere Lotkornfraktion von Vorteil ist um eine optimale Anbindung der metallischen Oberflächen zu gewährleisten.

Bei dem erfindungsgemäßen Verbindungsmaterial ist das Lotmaterial mit einem ersten Klebemittel auf dem Trägermaterial fixiert.

Als erstes Klebemittel können beispielsweise bekannte organische Klebemittel oder Klebemittel auf Wasserbasis eingesetzt werden. Das erste Klebemittel vermittelt in vorteilhafter Weise eine gute Haftung zwischen Trägermaterial und Lotmaterial, so dass eine sichere und präzise Positionierung des Lotmaterials durch Positionierung des Trägermaterials relativ zu den zu verlötenden zumindest teilweise metallischen Oberflächen erreicht werden kann.

Bei dem erfindungsgemäßen Verbindungsmaterial weist das Lotmaterial auf einer vom Trägermaterial abgewandten Seite ein zweites Klebemittel auf.

Dies kann insbesondere dann vorteilhaft sein, wenn das Lotmaterial durch Abrollen des Verbindungsmaterials auf der mit Lotmaterial zu versehenden metallischen Oberfläche übertragen werden soll. Hierzu wird das Verbindungsmaterial der Länge nach auf die zumindest teilweise metallische Oberfläche abgerollt, so dass das Lotmaterial auf der Oberfläche durch das zweite Klebemittel vermittelt haften bleibt. Das Trägermaterial kann dann einfach vom Lotmaterial abgezogen werden. Das Lotmaterial wird also ähnlich einem Etikett auf die zumindest teilweise metallische Oberfläche aufgeklebt. Besonders vorteilhaft ist in diesem Zusammenhang, eine durch das erste Klebemittel verursachte erste Adhäsivkraft größer ist als eine durch das zweite Klebemittel verursachte zweite Adhäsivkraft. Weiterhin vorteilhaft ist in diesem Zusammenhang, dass das Lotmaterial als Lötfolie ausgebildet ist, da hier ein Auftrag des zweiten Klebemittels in einfacher Art und Weise möglich ist.

Gemäß einer weiteren vorteilhaften Ausführung des erfindungsgemäßen Verbindungsmaterials ist auf einer vom Lotmaterial abgewandten Seite des Trägermaterials ein drittes Klebemittel ausgebildet.

Durch dieses dritte Klebemittel kann das Verbindungsmaterial in einfacher Weise fixiert werden. Insbesondere kann so auch eine Vorfixierung des zu verlötenden Produkts erreicht werden. Weiterhin wird durch die Ausbildung des dritten Klebemittels in vorteilhafter Weise die Genauigkeit der Positionierung des Lotmaterials relativ zu der zu verlötenden zumindest teilweise metallischen Oberfläche erhöht, da ein nachträgliches Verschieben des Verbindungsmaterials relativ zur Oberfläche vermieden wird.

Gemäß einer weiteren vorteilhaften Ausführung des erfindungsgemäßen Verbindungsmaterials ist das Trägermaterial aus einem Metall, einem Kunststoff und/oder Papier, bevorzugt einem Kunststoff und/oder Papier ausgebildet.

Sowohl Kunststoffe als auch Metalle und Papier erlauben eine einfache Herstellung und Handhabung des Verbindungsmaterials. Aus Herstellung von Klebeetiketten bekannte Trägermaterialien können in vorteilhafter Weise zum Einsatz kommen. Auch ein mit Kunststoff beschichtetes Papier kann als Trägermaterial erfindungsgemäß eingesetzt werden.

Gemäß einer weiteren vorteilhaften Ausführung des erfindungsgemäßen Verbindungsmaterials weist das Trägermaterial eine kritische Temperatur auf, bei deren Überschreiten das Trägermaterial zerstört wird, die kleiner oder gleich einer Schmelztemperatur des Lotmaterials ist. Besonders bevorzugt ist in diesem Zusammenhang, dass das Trägermaterial bei Erreichen mindestens der kritischen Temperatur zumindest teilweise verdampft beziehungsweise sich zumindest teilweise zersetzt, bevorzugt im wesentlichen rückstandsfrei verdampft beziehungsweise sich im wesentlichen rückstandsfrei zersetzt.

Hierdurch ist in vorteilhafter Weise gewährleistet, dass das verlötete Endprodukt bevorzugt keine Rückstände des Trägermaterials aufweist. Ein Verdampfen kann insbesondere bei der Ausbildung des Trägermaterials zumindest teilweise aus Kunststoff auftreten. Auch eine weitestgehend rückstandsfreie Verbrennung des Trägermaterials ist möglich und erfindungsgemäß.

Gemäß einem weiteren Aspekt des erfinderischen Gedankens wird ein Verfahren zur Herstellung eines Wabenkörpers mit einer Wabenstruktur mit zumindest teilweise für ein Fluid durchströmbaren Hohlräumen vorgeschlagen, welches zumindest die folgenden Schritte umfasst:
A) Bereitstellen mindestens einer zumindest teilweise metallischen Lage;
B) Positionieren von Lotmaterial zumindest auf Verbindungsbereichen mindestens einer der Lagen;
C) Ausbilden der Wabenstruktur aus der mindestens einen Lage;
D) gegebenenfalls Bereitstellen eines Mantelrohrs;
E) gegebenenfalls Positionieren von Lotmaterial zumindest auf einem Anbindungsbereich einer Außenfläche der Wabenstruktur und/oder einer Innenfläche des Mantelrohrs;
F) gegebenenfalls Einführen der Wabenstruktur in das Mantelrohr;
G) Durchführen eines Lötvorgangs,
wobei in Verfahrensschritt B) und/oder E) das Lotmaterial (3) zumindest teilweise in Form eines Verbindungsmaterials (1) nach einem der Ansprüche 1 bis 7 positioniert wird.

Somit erlaubt das erfindungsgemäße Verfahren die Herstellung eines Wabenkörpers aus zumindest teilweise metallischen Lagen, der nur eine Wabenstruktur umfasst und eines Wabenkörper, der eine Wabenstruktur in einem Mantelrohr, bevorzugt einem metallischen Mantelrohr umfasst. Hier kann das erfindungsgemäße Verbindungsmaterial (siehe Anspruch 1) sowohl zur Ausbildung der Verbindungen in der Wabenstruktur als auch zur Verbindung der Wabenstruktur mit dem Mantelrohr eingesetzt werden. Die Kombination mit beliebigen anderen Verfahren zur Belotung ist möglich und erfindungsgemäß. Das Aufkleben der Lötfolie kann durch bekannte Klebemittel erfolgen, beispielsweise solche auf Wasserbasis oder auf organischer Basis. Das erfindungsgemäße Verfahren zur Herstellung eines Wabenkörpers erlaubt erstmals die wirtschaftlich sinnvolle Herstellung von Wabenkörpern mit versetzten Lötungen gemäß der DE 33 12 944 A1.

Insbesondere eignen sich die so hergestellten Wabenkörper zum Einsatz im Kraftfahrzeugbau, insbesondere im Abgassystem eines Kraftfahrzeugs. Dort kann ein erfindungsgemäß hergestellter Wabenkörper beispielsweise als Katalysator-Trägerkörper, Filterkörper, Adsorberkörper und/oder Schalldämpfer dienen. Entsprechend können die zumindest teilweise metallischen Lagen zumindest zum Teil als Blechlagen, Faserlagen, Filterlagen und/oder Kompositlagen ausgebildet sein. Unter einer Kompositlage ist beispielsweise eine Lage zu verstehen, die sowohl metallische als auch nichtmetallische Anteile aufweist, beispielsweise eine keramische Faserlage, die in einer porösen Metalldecklage gehalten ist. Weiterhin kann eine Lage im Sinne der vorliegenden Erfindung auch eine beliebige Kombination von Teillagen umfassen, beispielsweise eine mit Blechlagenabschnitten verstärkte Faserlage oder ähnliches. Insbesondere können auch Wabenkörper mit großen Durchmessern, bevorzugt von mehr als 150 mm (Millimetern) mit den erfindungsgemäßen Verfahren hergestellt werden. Unter einem Durchmesser ist bei einem Wabenkörper, der einen nicht kreisförmigen Querschnitt aufweist, eine charakteristische Abmessung dieses Querschnitts, beispielsweise ein maximaler, minimaler oder gemittelter Durchmesser, zu verstehen.

Das erfindungsgemäße Verfahren zur Herstellung eines Wabenkörpers erlaubt es bei einfacher und kostengünstiger Positionierung des Lotmaterials nur bestimmte diskrete Verbindungsbereiche der Lagen untereinander und/oder zwischen Wabenstruktur und Mantelrohr zu verbinden. So können Wabenkörper hergestellt werden, die flexibel sind, wobei die Flexibilität beispielsweise auch an den späteren Einsatz angepasst sein kann, also insbesondere an die zu erwartenden Abgasvolumenströme, die Frequenz der Pulsatilität dieser Ströme und die Impulse dieser Ströme. So können in vorteilhafter Weise Wabenkörper hergestellt werden, deren Dauerhaltbarkeit erhöht ist. Diese Wabenkörper können mit dem erfindungsgemäßen Verbindungsmaterial oder durch Aufkleben von Lötfolie einfach und kostengünstig hergestellt werden. Bevorzugt können mehrere Verbindungsbereiche auf einer Lage ausgebildet sein, insbesondere auch auf beiden Längsseiten einer Lage.

Gemäß einer vorteilhaften Ausgestaltung des erfindungsgemäßen Verfahrens wird die Lötfolie vor oder in Verfahrensschritt B) auf die Abmessungen des Verbindungsbereichs abgelängt.

Somit entsprechen die Abmessungen der Lötfolie nach der Ablängung den gewünschten Abmessungen des Verbindungsbereichs.

Bei dem erfindungsgemäßen Verfahren ist die Lötfolie mit einem Trägermaterial verbunden.

Eine solche Lötfolie auf einem Trägermaterial kann ein Verbindungsmaterial wie oben beschrieben darstellen. Allerdings kann hier auch ein kontinuierliche Lötfolie auf Trägermaterial vorliegen, die jeweils entsprechend den benötigten Abmessungen des Verbindungsbereichs abgelängt wird. Die kontinuierliche Lötfolie kann Sollbruchstellen aufweisen, die zu einer gewünschten Ablängung führen.

Gemäß einer weiteren vorteilhaften Ausgestaltung des erfindungsgemäßen Verfahrens wird in Verfahrensschritt A) mindestens eine zumindest teilweise strukturierte Lage bereitgestellt.

Gemäß einer weiteren vorteilhaften Ausgestaltung des erfindungsgemäßen Verfahrens wird dass in Verfahrensschritt A) mindestens eine im wesentlichen glatte Lage bereitgestellt.

Beispielsweise kann eine Wabenstruktur hergestellt werden, in dem im Verfahrensschritt C) mindestens eine zumindest teilweise strukturierte Lage und gegebenenfalls mindestens eine im wesentlichen glatte Lage spiralförmig aufgewickelt wird. Unter im wesentlichen glatter Lage ist eine Lage zu verstehen, die glatt sein, aber auch Mikrostrukturierungen aufweisen kann, deren Strukturamplitude wesentlich kleiner ist als die der zumindest teilweise strukturierten Lage. Unter einer Strukturierung ist insbesondere eine Wellung, beispielsweise eine Sinus-, Sägezahn- und/oder Dreieckswellung zu verstehen. Bevorzugt ist eine Strukturierung periodisch, weist also eine charakteristische Wiederhollänge wie beispielsweise eine Wellenlänge auf.

Eine Wabenstruktur kann in Verfahrensschritt C) beispielsweise auch dadurch ausgebildet werden, dass mindestens eine zumindest teilweise strukturierte Lage und gegebenenfalls mindestens eine im wesentlichen glatte Lage zu mindestens einem Stapel gestapelt werden und mindestens ein Stapel gleich- oder gegensinnig verwunden wird.

Je nach Ausbildung der Lagen im Detail können so Wabenkörper gebildet werden, die eine Wabenstruktur mit Kanälen aufweisen, die die Wabenstruktur in einer Längsrichtung durchziehen. Auch die Ausbildung einer Wabenstruktur mit teilweise verschlossenen Kanälen, mit Leitstrukturen in der Kanalwandung, mit Perforationen, Verwirbelungsstrukturen etc. ist möglich und erfindungsgemäß.

Gemäß einer weiteren vorteilhaften Ausgestaltung des erfindungsgemäßen Verfahrens weist eine Strukturierung der zumindest teilweise strukturierten Lage einen charakteristischen Abstand zweier benachbarter Strukturextrema, insbesondere eine Wellenlänge, in Querrichtung der Strukturierung auf, wobei zumindest ein Teil der Verbindungsbereiche in Querrichtung der Strukturierung eine Ausdehnung aufweisen, die größer als der charakteristische Abstand ist.

Wird das Verbindungsmaterial auf eine glatte Lage aufgebracht, ist also das Lotmaterial in Verfahrensschritt b) oder B) auf einer im wesentlichen glatten Lage positioniert, so gewährleistet die bevorzugte Ausdehnung der Verbindungsbereiche das mindestens ein Strukturextremum der zumindest teilweise strukturierten Lage mit dem Verbindungsbereich zur Anlage kommt und somit dort mit der im wesentlichen glatten Lage verbunden wird. Besonders bevorzugt ist in diesem Zusammenhang, dass der Quotient des charakteristischen Abstands und der Ausdehnung zwischen im wesentlichen 1,2 und im wesentlichen 5, bevorzugt zwischen im wesentlichen 1,5 und im wesentlichen 3, besonders bevorzugt zwischen im wesentlichen 1,8 und im wesentlichen 2,5 beträgt.

Neben einem Aufbringen des Verbindungsmaterials auf einer im wesentlichen glatten Lage ist auch das Aufbringen des Verbindungsmaterials auf eine zumindest teilweise strukturierte Lage möglich und erfindungsgemäß. Eine Kombination dieser beiden Aufbringungsarten in einem Wabenkörper ist möglich und erfindungsgemäß.

Gemäß einer weiteren vorteilhaften Ausgestaltung des erfindungsgemäßen Verfahrens entsprechen die Abmessungen des Trägermaterials des Verbindungsmaterials im wesentlichen zumindest teilweise den Abmessungen zumindest einer der Lagen.

Zumindest teilweise entsprechen bedeutet in diesem Zusammenhang, das eine Abmessung des Verbindungsmaterials im wesentlichen einer entsprechenden Abmessung einer der Lagen entspricht, also beispielsweise das Verbindungsmaterial und eine Lage die gleiche Länge und/oder Breite aufweisen. Dies ermöglicht in besonders einfacher Weise die Positionierung, da Verbindungsmaterial und Lage entsprechend gegeneinander ausgerichtet werden können..

Gemäß einer weiteren vorteilhaften Ausgestaltung des erfindungsgemäßen Verfahrens wird das Verbindungsmaterial im Verfahrensschritt B) auf der Lage oder in Verfahrensschritt E) auf der Außenfläche der Wabenstruktur und/oder der Innenfläche des Mantelrohrs fixiert.

Diese Fixierung kann durch entsprechende Klebemittel auf dem Trägermaterial und/oder dem Lotmaterial erreicht werden. Wird das Lotmaterial auf der Lage oder der Außenfläche der Wabenstruktur und/oder der Innenfläche des Mantelrohrs fixiert, so kann das Trägermaterial abgezogen werden, so dass dieses nicht in den Wabenkörper eingewickelt wird.

Gemäß einer weiteren vorteilhaften Ausgestaltung des erfindungsgemäßen Verfahrens wird vor oder im Verfahrensschritt B) oder E) ein drittes Klebemittel auf dem Trägermaterial aufgetragen.

Durch den Auftrag von dem dritten Klebemittel auf dem Trägermaterial kann eine entsprechende Fixierung des Verbindungsmaterials auf den Verbindungsbereichen der zu verbindenden Lagen erreicht werden.

Gemäß einer weiteren vorteilhaften Ausgestaltung des erfindungsgemäßen Verfahrens werden auf einer Lage auf beiden Längsseiten Verbindungsbereiche ausgebildet, wobei die Lage an einer Koordinate jeweils nur auf einer Längsseite einen Verbindungsbereich aufweist.

Die Lage weist also keinen Punkt auf, welcher auf beiden Längsseiten Verbindungsbereiche aufweist. Dies ermöglicht den Aufbau von Wabenkörpern mit sehr gutem thermischem Dehnverhalten, da ein Wabenkörper aufgebaut aus entsprechenden Lagen Relativbewegungen der Lagen senkrecht zur Längsrichtung des Wabenkörpers in gewissem Maße zulässt, ohne dass es zum Bruch einer Lötverbindung kommt.

Gemäß einer weiteren vorteilhaften Ausgestaltung des erfindungsgemäßen Verfahrens werden die Verbindungsbereiche so ausgebildet, dass in einer Längsrichtung des Wabenkörpers mindestens zwei Teilbereiche gebildet werden, in denen Verbindungsbereiche ausgebildet sind, wobei eine Lage auf einer Längsseite nur Verbindungsbereiche in einem Teilbereich aufweist.

Ein so hergestellter Wabenkörper weist ein gutes thermisches Dehnungsverhalten bei gleichzeitiger guter Dauerhaltbarkeit auf. Insbesondere erlauben die versetzten Verbindungsbereiche auch eine Relativbewegung der einzelnen Lagen in Längsrichtung des Wabenkörpers. Die Teilbereiche werden bevorzugt an den oder benachbart zu Stirnseiten des Wabenkörpers ausgebildet. Die Ausbildung eines weiteren dritten Teilbereichs im wesentlichen in Längsrichtung zentral im Wabenkörper ist alternativ oder zusätzlich möglich und erfindungsgemäß. Besonders vorteilhaft ist in diesem Zusammenhang, wenn im ersten und im zweiten Teilbereich die Verbindungsbereiche auf einer ersten Längsseite der Lagen ausgebildet sind, während im dritten Teilbereich die Verbindungsbereiche auf einer zweiten Längsseite, die der ersten Längsseite gegenüber liegt, ausgebildet sind. Eine solche ziehharmonikaartige Verlötung hat sich als besonders vorteilhaft in Bezug auf das thermische Dehnungsverhalten und die Dauerhaltbarkeit erwiesen.

Gemäß einem weiteren Aspekt wird ein Wabenkörper beschrieben, umfassend eine Wabenstruktur mit für ein Fluid zumindest teilweise durchströmbaren Hohlräumen aus mindestens einer zumindest teilweise metallischen Lage und gegebenenfalls ein die Wabenstruktur umgebendes Mantelrohr, bei dem eine Lage nur in Verbindungsbereichen mit sich selbst und/oder einer benachbarten Lage und/oder mindestens eine Lage nur in Anbindungsbereichen mit dem Mantelrohr verlötet ist, wobei das Lotmaterial in zumindest einem Teil der Verbindungsbereiche und/oder der Anbindungsbereiche durch ein erfindungsgemäßes Verbindungsmaterial positioniert oder als Lötfolie aufgeklebt wurde.

Insbesondere kann der Wabenkörper nach dem erfindungsgemäßen Verfahren zur Herstellung eines Wabenkörpers hergestellt worden sein.

Gemäß einer vorteilhaften Ausführung des Wabenkörpers weist der Wabenkörper einen Durchmesser von im wesentlichen größer oder gleich 150 mm (Millimeter) auf.

Gemäß einer weiteren vorteilhaften Ausgestaltung des Wabenkörpers umfasst der Wabenkörper mindestens eine Lage, die auf beiden Längsseiten Verbindungsbereiche umfasst, wobei die Lage an einer Koordinate jeweils nur auf einer Längsseite einen Verbindungsbereich aufweist.

Gemäß einer weiteren vorteilhaften Ausgestaltung sind die Verbindungsbereiche so ausgebildet sind, dass in einer Längsrichtung des Wabenkörpers mindestens zwei Teilbereiche gebildet werden, in denen Verbindungsbereiche ausgebildet sind, wobei eine Lage auf einer Längsseite nur Verbindungsbereiche in einem Teilbereich aufweist.

Gemäß einer weiteren vorteilhaften Ausgestaltung des Wabenkörpers ist jeweils ein Teilbereich im Bereich einer oder benachbart zu einer Stirnseite des Wabenkörpers ausgebildet.

Gemäß einer weiteren vorteilhaften Ausgestaltung des Wabenkörpers ist ein dritter Teilbereich im wesentlichen in Längsrichtung zentral im Wabenkörper ausgebildet.

Weiterhin wird ein Kraftfahrzeug beschrieben, welches mindestens einen nach dem erfindungsgemäßen Verfahren hergestellten Wabenkörper umfasst.

Unter einem Kraftfahrzeug wird hier insbesondere ein Personenkraftwagen, ein Lastkraftwagen, ein motorisiertes Zweirad, ein Quad, ein Boot und ein Luftfahrzeug verstanden.

Die zu dem erfindungsgemäßen Verbindungsmaterial, dem erfindungsgemäßen Verfahren, dem Wabenkörper und dem Kraftfahrzeug offenbarten Details und Vorteile sind jeweils wechselweise aufeinander anwendbar und übertragbar.

Im folgenden wird die Erfindung anhand der Zeichnung näher erläutert, ohne dass die Erfindung auf die dort gezeigten Ausführungsbeispiele beschränkt wäre. Es zeigen:
- Fig. 1: schematisch einen Ausschnitt eines erfindungsgemäßen Verbindungsmaterials in Draufsicht;
- Fig. 2: schematisch einen Ausschnitt eines erfindungsgemäßen Verbindungsmaterials im Querschnitt;

- Fig. 3: schematisch einen Verfahrensschritt der erfindungsgemäßen Verfahren zur Herstellung eines Wabenkörpers;
- Fig. 4: schematisch einen Stapel aus einer Mehrzahl von Lagen in perspektivischer Ansicht;
- Fig. 5: schematisch einen Stapel einer Mehrzahl von Lagen im Querschnitt;
- Fig. 6: schematisch einen Wabenkörper im Querschnitt, der durch das erfindungsgemäße Verfahren hergestellt sein kann;
- Fig. 7: schematisch einen Ausschnitt aus einem Wabenkörper, der durch das erfindungsgemäße Verfahren hergestellt sein kann;
- Fig. 8: schematisch eine Lage zum Aufbau eines Wabenkörpers in Draufsicht, der durch das erfindungsgemäße Verfahren hergestellt sein kann;
- Fig. 9: schematisch eine Lage zum Aufbau eines Wabenkörpers in seitlicher Ansicht, der durch das erfindungsgemäße Verfahren hergestellt sein kann; und
- Fig. 10: schematisch einen Ausschnitt aus einem Wabenkörper im Längsschnitt, der durch das erfindungsgemäße Verfahren hergestellt sein kann.

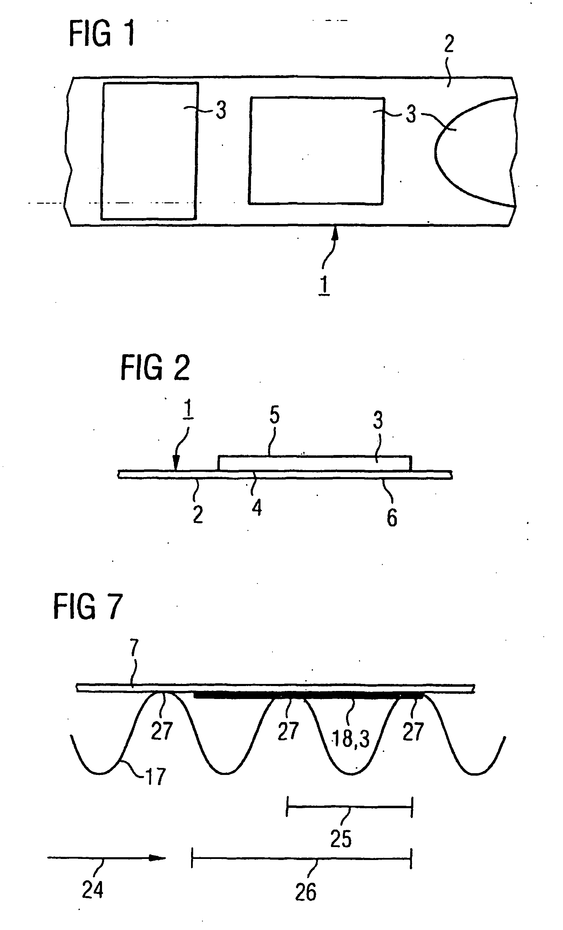

Fig. 1 zeigt schematisch einen Ausschnitt eines erfindungsgemäßen Verbindungsmaterials 1 in Draufsicht. Das Verbindungsmaterial 1 besteht aus einem Trägermaterial 2 und einem Lotmaterial 3, welches diskontinuierlich auf dem Trägermaterial 2 ausgebildet ist. Das Lotmaterial 3 ist als Lötfolie (zumindest teilweise) oder als Lotpulver ausgebildet. Die Bereiche von Lotmaterial 3 können verschiedene Formen und Größen aufweisen.

Fig. 2 zeigt schematisch einen Ausschnitt eines erfindungsgemäßen Verbindungsmaterials 1 im Querschnitt. Das Lotmaterial 3 ist mittels einer Schicht eines ersten Klebemittels 4 auf dem Trägermaterial 2 fixiert. Auf einer vom Trägermaterial 2 abgewandten Seite ist eine Schicht eines zweiten Klebemittels 5 ausgebildet, mit dem das Lotmaterial auf einer zumindest teilweise metallischen Oberfläche fixiert werden kann. Dies kann beispielsweise ähnlich dem Aufkleben eines Etiketts erfolgen. Kumulativ kann auf einer vom Lotmaterial 3 abgewandten Seite des Trägermaterials 2 ein drittes Klebemittel 6 ausgebildet sein, mit der das Trägermaterial 2 auf einer Oberfläche, insbesondere einer zumindest teilweise metallischen Oberfläche, die mit Lotmaterial versehen werden soll, fixiert wird.

Die Klebemittel 4, 5, 6 sind so gewählt, dass die Adhäsivkräfte eine genaue Positionierung des Lotmaterials 3 auf den entsprechenden Oberflächen ermöglicht. Insbesondere verursacht das erste Klebemittel 4 eine erste Adhäsivkraft zwischen Trägermaterial 2, erstem Klebemittel 4 und Lotmaterial 3 und das zweite Klebemittel 5 eine zweite Adhäsivkraft zwischen Lotmaterial 3, zweitem Klebemittel 5 und zu belotender Oberfläche, die so aufeinander abgestimmt sind, dass das Aufkleben des Lotmaterials 3 auf die entsprechende mit Lotmaterial zu versehende Oberfläche bei gleichzeitiger Ablösung des Lotmaterials 3 vom Trägermaterial 2 erfolgt.

Das Trägermaterial 2 ist bevorzugt aus Kunststoff und/oder Papier ausgebildet. Insbesondere ist es bevorzugt, das Trägermaterial 2 aus einem Stoff auszubilden, der bei einer kritischen Temperatur, die unterhalb der Löttemperatur des Lotmaterials 3 liegt, möglichst rückstandsfrei verdampft oder sich möglichst rückstandsfrei zersetzt.

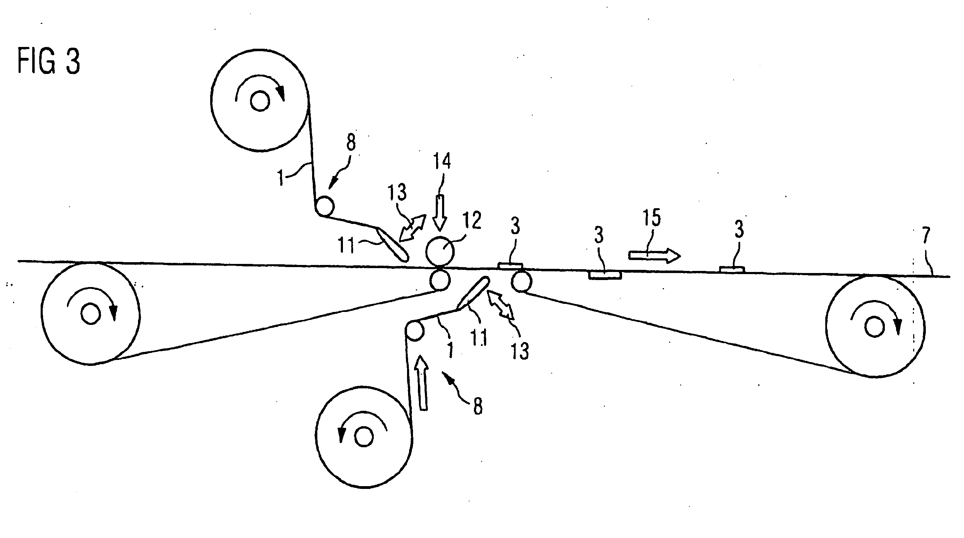

Fig. 3 zeigt schematisch den Verfahrensschritt B) eines der erfindungsgemäßen Verfahren zur Herstellung eines Wabenkörpers. Hier wird beispielhaft gezeigt, wie Lotmaterial 3 auf einer im wesentlichen glatten Lage 7 aufgebracht wird. Hierzu sind zwei Lotapplikationseinheiten 8 ausgebildet. Diese umfassen jeweils eine Vorratsrolle 9 von Verbindungsmaterial 1, entsprechende Führungsrollen 10 und Applikatoren 10. Die Applikatoren 10 pressen die einzelnen Bereiche von Lotmaterial 3, die mit einem zweiten Klebemittel 5 (nicht gezeigt) versehen sind, durch eine Bewegung in Applikationsrichtung 13 an vorbestimmbaren Positionen auf die im wesentlichen glatte Lage 7, so dass entsprechende Verbindungsbereiche der im wesentlichen glatten Lage 7 mit Lotmaterial 3 versehen werden. Gegebenenfalls kann eine Anpressrolle 12 ausgebildet sein, mit der das Lotmaterial 3 durch Andrücken in Anpressrichtung 14 nachfixiert wird. Aus Gründen der Übersichtlichkeit wird auf eine Darstellung der Abfuhr des verbrauchten Trägermaterials 2 verzichtet. Die im wesentlichen, glatte Lage 7 wird in Bewegungsrichtung 15 bewegt.

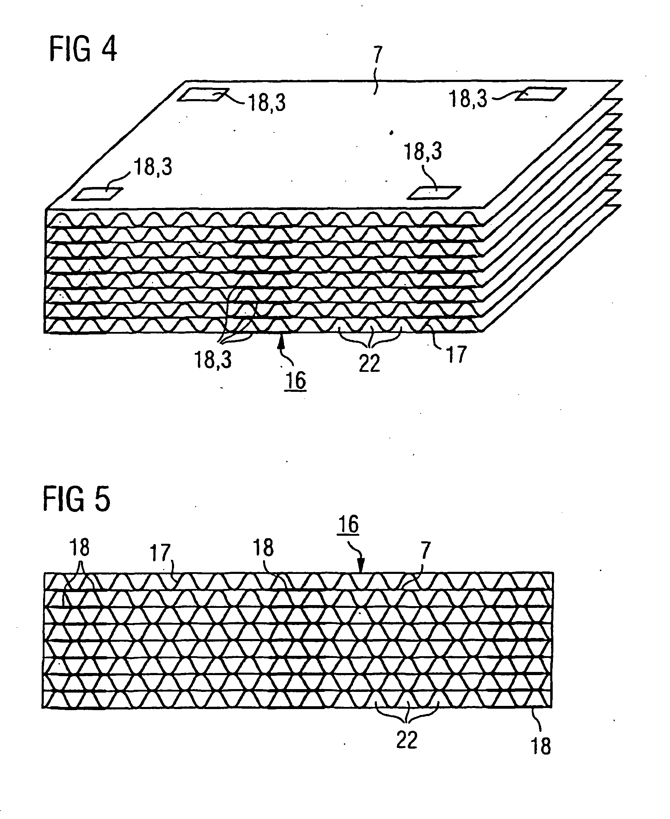

Fig. 4 zeigt schematisch einen Stapel 16 aus mehreren im wesentlichen glatten Lagen 7 und zumindest teilweise strukturierten Lagen 17, die Kanäle 22 bilden. Die im wesentlichen glatten Lagen 7 weisen Verbindungsbereiche 18 auf, in denen Lotmaterial 3 auf die glatte Lage 7 aufgetragen ist. Im vorliegenden Beispiel weist jede im wesentlichen glatte Lage 7 auf einer Längsseite vier Verbindungsbereiche 18 jeweils im Randbereich der Lage 7 und auf der ihr gegenüberliegenden zweiten Längsseite der Lage 7 zwei im wesentlichen mittig liegende Verbindungsbereiche 18 auf. Fig. 5 zeigt einen Querschnitt des Stapels 16 aus Fig. 4.

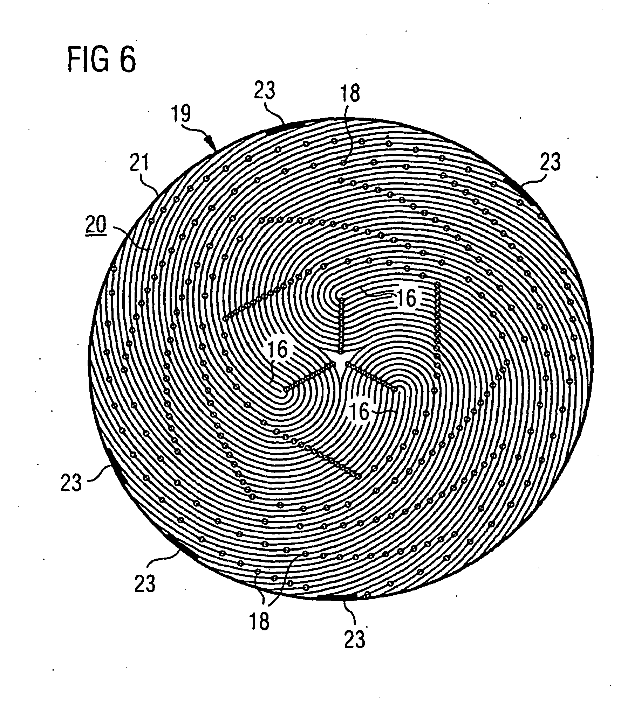

Fig. 6 zeigt schematisch einen Wabenkörper 19 im Querschnitt, der durch das erfindungsgemäße Verfahren hergestellt sein kann. Der Wabenkörper 19 umfasst eine Wabenstruktur 20, die in einem Mantelrohr 21 ausgebildet ist. Die Wabenstruktur 20 wurde durch Umklappen dreier Stapel 16 und anschließendes Verwinden ausgebildet. Der Übersichtlichkeit halber wurde auf eine Darstellung der zumindest teilweise strukturierten Lagen 17 verzichtet.

Durch das Verwinden entsteht das gezeigte Muster von Verbindungsbereichen 18, die als kleine Kreise dargestellt werden. Eine solche Anordnung der Verbindungsbereiche führt in vorteilhafter Weise zu einem elastischen, dauerhaltbaren Wabenkörper 19, der insbesondere als Katalysator-Trägerkörper oder Filterkörper im Abgassystem eines Kraftfahrzeuges eingesetzt werden kann. Die Wabenstruktur 20 ist über Anbindungsbereiche 23 am Mantelrohr 21 fixiert, die über ein erfindungsgemäßes Verbindungsmaterial 1 positioniert wurden.

Fig. 7 zeigt schematisch einen Ausschnitt aus einem Wabenkörper 19, der durch das erfindungsgemäße Verfahren hergestellt sein kann. Eine im wesentlichen glatte Lage 7 ist über einen durch Lotmaterial 3 ausgebildeten Verbindungsbereich 18 mit einer zumindest teilweise strukturierten Lage 17 verbunden. Die zumindest teilweise strukturierte Lage 17 ist gewellt, so dass sie in einer Querrichtung 24 der Strukturierung eine Wellenlänge 25, also einen Abstand zweier Strukturmaxima 27 aufweist. Der Verbindungsbereich 18 weist eine Ausdehnung 26 in Querrichtung 24 auf, die größer als die Wellenlänge 25 ist.

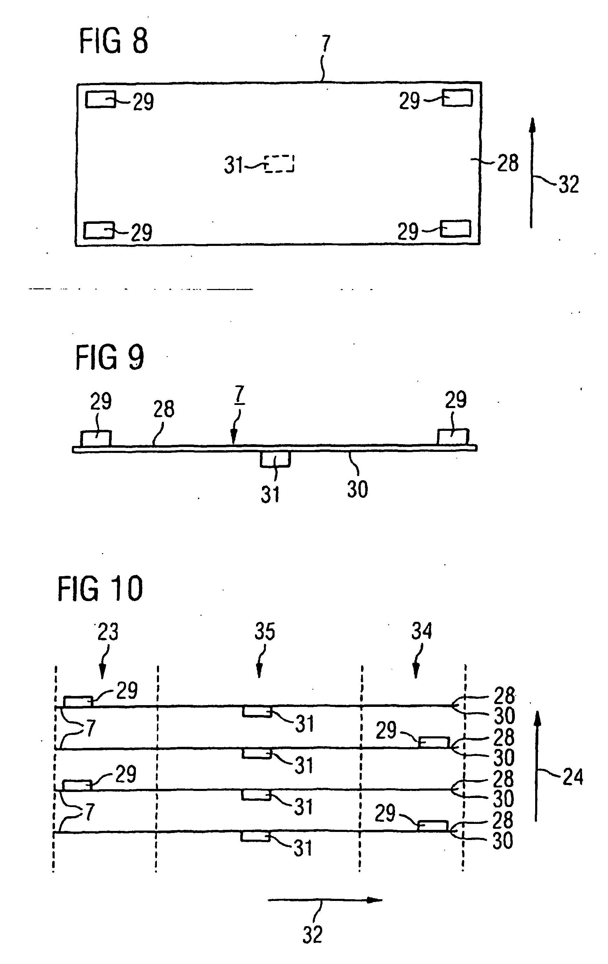

Fig. 8 zeigt schematisch eine im wesentlichen glatte Lage 7 zum Aufbau eines erfindungsgemäßen Wabenkörpers 19, der durch das erfindungsgemäße Verfahren hergestellt sein kann, in einer Draufsicht auf eine erste Längsseite 28. Auf der ersten Längsseite 28 sind erste Verbindungsbereiche 29 ausgebildet, während auf einer zweiten Längsseite 30 ein zweiter Verbindungsbereich 31 ausgebildet sind. Dieser ist gepunktet abgebildet um anzudeuten, dass dieser auf der zweiten Längsseite 30 ausgebildet ist. Die im wesentlichen glatte Lage 7 weist keinen Punkt auf, an dem auf beiden Längsseiten 28, 30 Verbindungsbereiche 29, 31 ausgebildet sind. Es liegen also keine Verbindungsbereiche 29, 31 gegenüber am selben Punkt der Lage 7. Eine entsprechende Ausbildung der Verbindungsbereiche 29, 31 ist gleichfalls auf einer zumindest teilweise strukturierten Lage 17 möglich und erfindungsgemäß. Die Anzahl und Lage der Verbindungsbereiche 29, 31 ist nur als Beispiel zu verstehen. Weiterhin zeigt Fig. 8 die spätere Längsrichtung 32 des Wabenkörpers 19.

Fig. 9 zeigt eine seitliche Ansicht der in Fig. 8 gezeigten im wesentlichen glatten Lage 7. Auf der ersten Längsseite 28 sind erste Verbindungsbereiche 29 ausgebildet, während auf der zweiten Längsseite 30 ein zweiter Verbindungsbereich 31 ausgebildet ist.

Fig. 10 zeigt schematisch einen Ausschnitt eines Wabenkörpers 19 im Längsschnitt, der durch das erfindungsgemäße Verfahren hergestellt sein kann, wobei der Übersichtlichkeit halber auf die Darstellung der zumindest teilweise strukturierten Lagen 17 verzichtet wurde, die zwischen den gezeigten im wesentlichen glatten Lagen 7 liegen. Schematisch sind erste 29 und zweite Verbindungsbereiche 31 eingezeichnet, wobei die ersten Verbindungsbereiche 29 jeweils auf der ersten Längsseite 28 der im wesentlichen glatten Lagen 7, während die zweiten Verbindungsbereiche 31 jeweils auf der zweiten Längsseite 30 der im wesentlichen glatten Lagen 7 ausgebildet sind. In den Verbindungsbereichen 29, 31 besteht eine Verbindung der im wesentlichen glatten Lage 7 mit benachbarten zumindest teilweise strukturierten Lagen 17. Die Verbindungsbereiche 29, 31 werden durch Lotmaterial 3 gebildet, welches mittels des erfindungsgemäßen Verbindungsmaterials 1 positioniert oder durch aufgeklebte Lötfolie gebildet werden.

In einer Längsrichtung 32 des Wabenkörpers 19, in dem die nicht eingezeichneten Kanäle 22 zumindest teilweise durchströmbar sind, sind ein erster Teilbereich 33, ein zweiter Teilbereich 34 und ein dritter Teilbereich 35 ausgebildet. Die ersten Verbindungsbereiche 29 sind jeweils so ausgebildet, dass eine einzelne Lage 7 auf der ersten Längsseite 28 nur erste Verbindungsbereiche 29 auf der ersten Längsseite 28 der im wesentlichen glatten Lage 7 aufweist. Die ersten Verbindungsbereiche 28 einer Lage 7 gehören also entweder zum ersten Teilbereich 33 oder zum zweiten Teilbereich 34. Es gibt folglich bevorzugt keine Lage 7, die erste Verbind dungsbereiche 29 im ersten 32 und im zweiten Teilbereich 34 aufweist.

Der erste 33 und der zweite Teilbereich 34 liegen bevorzugt im Bereich einer oder benachbart zu einer Stirnseite des Wabenkörpers 19. Der dritte Teilbereich 35 liegt im wesentlichen zentral in Bezug auf die Ausdehnung des Wabenkörpers 19 beziehungsweise der Lagen 7.

Ein entsprechend Fig. 10 ausgebildeter Wabenkörper 19 weist ein sehr gutes thermisches Dehnungsverhalten auf, da eine Relativbewegung der einzelnen Lagen 7, 17 beispielsweise ausgelöst durch das thermische Dehnungsverhalten der Lagen 7, 17 gegeneinander in gewissem Umfang sowohl in Längsrichtung 32, als auch in einer Querrichtung 24 möglich ist. Gleichzeitig weist ein solcher Wabenkörper 19 eine sehr gute Dauerhaltbarkeit auf.

Das erfindungsgemäße Verbindungsmaterial 1 wird bei der Herstellung von Wabenkörpern 19 eingesetzt, da mittels des Verbindungsmaterials 1 in einfacher Weise eine Verbindung von benachbarten Lagen 7, 17 des Wabenkörpers 19 nur in diskreten Verbindungsbereichen 18 möglich ist. So können Wabenkörper 19 hergestellt werden, die elastisch und doch dauerhaltbar sind.

### Bezugszeichenliste

- 1: Verbindungsmaterial
- 2: Trägermaterial
- 3: Lotmaterial
- 4: erstes Klebemittel
- 5: zweites Klebemittel
- 6: drittes Klebemittel
- 7: im wesentlichen glatte Lage
- 8: Lotapplikationseinheit
- 9: Vorratsrolle
- 10: Führungsrolle
- 11: Applikator
- 12: Anpressrolle
- 13: Applikationsrichtung
- 14: Anpressrichtung
- 15: Bewegungsrichtung
- 16: Stapel
- 17: zumindest teilweise strukturierte Lage
- 18: Verbindungsbereich
- 19: Wabenkörper
- 20: Wabenstruktur
- 21: Mantelrohr
- 22: Kanal
- 23: Anbindungsbereich
- 24: Querrichtung
- 25: Wellenlänge
- 26: Ausdehnung
- 27: Stukturmaximum
- 28: erste Längsseite
- 29: erster Verbindungsbereich

- 30: zweite Längsseite
- 31: zweiter Verbindungsbereich
- 32: Längsrichtung
- 33: erster Teilbereich
- 34: zweiter Teilbereich
- 35: dritter Teilbereich

## Patentansprüche

1. Verbindungsmaterial (1) zum Positionieren von Lotmaterial (3) auf mindestens einem diskreten Verbindungsbereich (18, 29, 31) einer zumindest teilweisen metallischen Oberfläche (7, 17) eines Wabenkörpers (19) eines Abgassystems, wobei ein Lotmaterial (3) diskontinuierlich auf einem kontinuierlichen Trägermaterial (2) ausgebildet ist **dadurch gekennzeichnet, dass** das Lotmaterial (3) zumindest teilweise als Lötfolie ausgebildet ist un weiter das Lotmaterial (3) mit einem ersten Klebemittel (4) auf dem Trägermaterial (2) fixiert ist und auf einer vom Trägermaterial (2) abgewandten Seite ein zweites Klebemittel (5) aufweist.

2. Verbindungsmaterial (1) nach Anspruch 1 , **dadurch gekennzeichnet, dass** das Lotmaterial (3) zumindest teilweise in Form von Lotkömen ausgebildet ist.

3. Verbindungsmaterial (1) nach Anspruch 1, **dadurch gekennzeichnet, dass** eine durch das erste Klebemittel (4) verursachte erste Adhäsivkraft größer ist als eine durch das zweite Klebemittel (5) verursachte zweite Adhäsivkraft.

4. Verbindungsmaterial (1) nach einem der vorhergehenden Ansprüche, **dadurch gekennzeichnet, dass** auf einer vom Lotmaterial (3) abgewandten Seite des Trägermaterials (2) ein drittes Klebemittel (6) ausgebildet ist.

5. Verbindungsmaterial (1) nach einem der vorhergehenden Ansprüche, **dadurch gekennzeichnet, dass** das Trägermaterial (2) aus einem Metall, einem Kunststoff und/oder Papier, bevorzugt Kunststoff und/oder Papier ausgebildet ist.

6. Verbindungsmaterial (1) nach einem der vorhergehenden Ansprüche, **dadurch gekennzeichnet, dass** das Trägermaterial (2) eine kritische Temperatur aufweist, bei deren Überschreiten das Trägermaterial (2) zerstört wird, die kleiner oder gleich einer Schmelztemperatur des Lotmaterials (3) ist.

7. Verbindungsmaterial (1) nach Anspruch 6, **dadurch gekennzeichnet, dass** das Trägermaterial (2) bei Erreichen mindestens der kritischen Temperatur zumindest teilweise verdampft beziehungsweise sich zumindest teilweise zersetzt, bevorzugt im wesentlichen rückstandsfrei verdampft beziehungsweise sich im wesentlichen rückstandsfrei zersetzt.

8. Verfahren zur Herstellung eines Wabenkörpers (19) mit einer Wabenstruktur (20) mit zumindest teilweise für ein Fluid durchströmbaren Hohlräumen (22), umfassend zumindest die folgenden Schritte:
A) Bereitstellen mindestens einer zumindest teilweise metallischen Lage (7,17);
B) Positionieren von Lotmaterial (3) zumindest auf Verbindungsbereichen (18) mindestens einer der Lagen (7,17);
C) Ausbilden der Wabenstruktur (20) aus der mindestens einen Lage (7, 17);
D) gegebenenfalls Bereitstellen eines Mantelrohrs (21);
E) gegebenenfalls Positionieren von Lotmaterial (3) zumindest auf einem Anbindungsbereich (23) einer Außenfläche der Wabenstruktur (20) und/oder einer Innenfläche des Mantelrohrs (21);
F) gegebenenfalls Einführen der Wabenstruktur (20) in das Mantelrohr (21);
G) Durchfahren eines Lötvorgangs,
**dadurch gekennzeichnet, dass** in Verfahrensschritt B) und/oder E) das Lotmaterial (3) zumindest teilweise in Form eines Verbindungsmaterials (1) nach einem der Ansprüche 1 bis 7 positioniert wird

9. Verfahren nach Anspruch 8, **dadurch gekennzeichnet, dass** die Lötfolie vor oder in Verfahrensschritt B) auf die Abmessungen des Verbindungsbereichs (18) abgelängt wird.

10. Verfahren nach einem der Ansprüche 8 oder 9, **dadurch gekennzeichnet, dass** in Verfahrensschritt A) mindestens eine zumindest teilweise strukturierte Lage (17) bereitgestellt wird.

11. Verfahren nach einem der Ansprüche 8 bis 10, **dadurch gekennzeichnet, dass** in Verfahrensschritt A) mindestens eine im wesentlichen glatte Lage (7) bereitgestellt wird.

12. Verfahren nach Anspruch 10 oder 11, bei dem eine Strukturierung der zumindest teilweise strukturierten Lage (17) einen charakteristischen Abstand zweier benachbarter Strukturextrema (27), insbesondere eine Wellenlänge (25), in Querrichtung (24) der Strukturierung aufweist, **dadurch gekennzeichnet, dass** zumindest ein Teil der Verbindungsbereiche (18, 29, 31) in Querrichtung (24) der Strukturierung eine Ausdehnung (26) aufweisen, die größer als der charakteristische Abstand (25) ist.

13. Verfahren nach Anspruch 12, **dadurch gekennzeichnet, dass** der Quotient des charakteristischen Abstands (25) und der Ausdehnung (26) zwischen im wesentlichen 1,2 und im wesentlichen 5, bevorzugt zwischen im wesentlichen 1,5 und im wesentlichen 3, besonders bevorzugt zwischen im wesentlichen 1,8 und im wesentlichen 2,5 beträgt.

14. Verfahren nach einem der Ansprüche 8 bis 13, **dadurch gekennzeichnet, dass** das Verbindungsmaterial (1) auf eine im wesentlichen glatte Lage (7) aufgebracht wird.

15. Verfahren nach einem der Ansprüche 8 bis 14, **dadurch gekennzeichnet, dass** das Verbindungsmaterial (1) auf eine zumindest teilweise strukturierte Lage (17) aufgebracht wird.

16. Verfahren nach einem der Ansprüche 8 bis 15 **dadurch gekennzeichnet, dass** die Abmessungen des Trägermaterials (2) im wesentlichen zumindest teilweise den Abmessungen zumindest einer der Lagen (7, 17) entsprechen.

17. Verfahren nach einem der Ansprüche 8 bis 16, **dadurch gekennzeichnet, dass** das Verbindungsmaterial (1) im Verfahrensschritt B) auf der Lage (7, 17) und/oder in Verfahrensschritt E) auf der Außenfläche der Wabenstruktur (20) und/oder der Innenfläche des Mantelrohrs (21) fixiert wird.

18. Verfahren nach einem der Ansprüche 8 bis 17, **dadurch gekennzeichnet, dass** vor oder im Verfahrensschritt B) oder E) ein Klebemittel (6) auf dem Trägermaterial (2) aufgetragen wird.

19. Verfahxen nach einem der Ansprüche 8 bis 18, **dadurch gekennzeichnet, dass** auf einer Lage (7, 17) auf beiden Längsseiten (28, 30) Verbindungsbereiche (18, 29, 31) ausgebildet werden, wobei die Lage (7, 17) an einer Koordinate jeweils nur auf einer Längsseite (28, 30) einen Verbindungsbereiche (18, 29, 31) aufweist.

20. Verfahren nach Anspruch 19, **dadurch gekennzeichnet, dass** die Verbindungsbereiche (18, 29, 31) so ausgebildet werden, dass in einer Längsrichtung (32) des Wabenkörpers (19) mindestens zwei Teilbereiche (33, 34, 35) gebildet werden, in denen Verbindungsbereiche (18, 29, 31) ausgebildet sind, wobei eine Lage (7, 17) auf einer Längsseite (28, 30) nur Verbindungsbereiche (18, 29, 31) in einem Teilbereich (33, 34, 35) aufweist.

21. Verfahren nach Anspruch 20, **dadurch gekennzeichnet, dass** jeweils ein Teilbereich (33, 34) im Bereich einer oder benachbart zu einer Stirnseite des Wabenkörpers (19) ausgebildet wird.

22. Verfahren nach Anspruch 3420 oder 21, **dadurch gekennzeichnet, dass** ein dritter Teilbereich (35) im wesentlichen in Längsrichtung (32) zentral im Wabenkörper (19) ausgebildet wird.

## Claims

1. A joining material (1) for positioning brazing material (3) on at least one discrete joining region (18, 29, 31) of an at least partially metallic surface (7, 17) of a honeycomb body (19) in an exhaust system, wherein a brazing material (3) is formed discontinuously on a continuous carrier material (2),
**characterized in that** the brazing material (3) is at least partially in the form of a brazing foil and further that the brazing material (3) is fixed on the carrier material (2) using a first adhesive (4) and has a second adhesive (5) on a side facing away from the carrier material (2).

2. The joining material (1) as claimed in claim 1, **characterized in that** the brazing material (3) is at least partially in the form of brazing grains.

3. The joining material (1) as claimed in claim 1, **characterized in that** a first adhesive force produced by the first adhesive (4) is greater than a second adhesive force produced by the second adhesive (5).

4. The joining material (1) as claimed in one of the preceding claims,
**characterized in that** a third adhesive (6) is formed on a side of the carrier material (2) which faces away from the brazing material (3).

5. The joining material (1) as claimed in one of the preceding claims,
**characterized in that** the carrier material (2) is formed from a metal, a plastic and/or paper, preferably plastic and/or paper.

6. The joining material (1) as claimed in one of the preceding claims,
**characterized in that** the carrier material (2) has a critical temperature above which the carrier material (2) is destroyed and which is less than or equal to the melting point of the brazing material (3).

7. The joining material (1) as claimed in claim 6, **characterized in that** the carrier material (2), when at least the critical temperature is reached, is at least partially evaporated and/or at least partially decomposed, preferably evaporated substantially without leaving any residues and/or decomposed substantially without leaving any residues.

8. A process for producing a honeycomb body (19) with a honeycomb structure (20) having cavities (22) which a fluid can at least partially flow through, comprising at least the following steps:
A) at least providing an at least partially metallic layer (7, 17);
B) positioning brazing material (3) at least on joining regions (18) of at least one of the layers (7, 17);
C) forming the honeycomb structure (20) from the at least one layer (7, 17);
D) if appropriate, providing a tubular casing (21);
E) if appropriate, positioning brazing material (3) at least on an attachment region (23) of an outer surface of the honeycomb structure (20) and/or an inner surface of the tubular casing (21);
F) if appropriate, introducing the honeycomb structure (20) into the tubular casing (21);
G) carrying out a brazing operation,
**characterized in that** in process step B) and/or E), the brazing material (3) is at least partially positioned in the form of the joining material (1) as claimed in one of claims 1 to 7.

9. The process as claimed in claim 8, **characterized in that** the brazing foil is cut to the dimensions of the joining region (18) prior to or during process step B).

10. The process as claimed in one of claims 8 or 9, **characterized in that** at least one at least partially structured layer (17) is provided in process step A).

11. The process as claimed in one of claims 8 to 10, **characterized in that** at least one substantially smooth layer (7) is provided in process step A).

12. The process as claimed in claim 10 or 11, in which a structuring of the at least partially structured layer (17) has a characteristic distance between two adjacent structure extremes (27), in particular a wavelength (25), in the transverse direction (24) of the structuring, **characterized in that** at least some of the joining regions (18, 29, 31), in the transverse direction (24) of the structuring, have an extent (26) which is greater than the characteristic distance (25).

13. The process as claimed in claim 12, **characterized in that** the quotient of the characteristic distance (25) and the extent (26) is between substantially 1.2 and substantially 5, preferably between substantially 1.5 and substantially 3, particularly preferably between substantially 1.8 and substantially 2.5.

14. The process as claimed in one of claims 8 to 13, **characterized in that** the joining material (1) is applied to a substantially smooth layer (7).

15. The process as claimed in one of claims 8 to 14, **characterized in that** the joining material (1) is applied to an at least partially structured layer (17).

16. The process as claimed in one of claims 8 to 15, **characterized in that** the dimensions of the carrier material (2) substantially at least partially correspond to the dimensions of at least one of the layers (7, 17).

17. The process as claimed in one of claims 8 to 16, **characterized in that** the joining material (1) is fixed to the layer (7, 17) in process step B) and/or is fixed to the outer surface of the honeycomb structure (20) and/or the inner surface of the tubular casing (21) in process step E).

18. The process as claimed in one of claims 8 to 17, **characterized in that** before or during process step B) or E) an adhesive (6) is applied to the carrier material (2).

19. The process as claimed in one of claims 8 to 18, **characterized in that** joining regions (18, 29, 31) are formed on both longitudinal sides (28, 30) of a layer (7, 17), the layer (7, 17) in each case having a joining region (18, 29, 31) on only one longitudinal side (28, 30) at a given coordinate.

20. The process as claimed in claim 19, **characterized in that** the joining regions (18, 29, 31) are formed in such a way that at least two subregions (33, 34, 35), in which joining regions (18, 29, 31) are produced, are formed in a longitudinal direction (32) of the honeycomb body (19), a layer (7, 17), on a longitudinal side (28, 30), only having joining regions (18, 29, 31) in a subregion (33, 34, 35).

21. The process as claimed in claim 20, **characterized in that** in each case one subregion (33, 34) is formed in the region of or adjacent to an end side of the honeycomb body (19).

22. The process as claimed in claim 20 or 21, **characterized in that** a third subregion (35) is formed substantially in the longitudinal direction (32) centrally within the honeycomb body (19).

## Revendications

1. Matériau de liaison (1) permettant de positionner un matériau de brasage (3) sur au moins une zone de liaison discrète (18, 29, 31) d'une surface au moins métallique partiellement (7, 17) d'un corps en nids d'abeilles (19) d'un système de gaz d'échappement, un matériau de brasage (3) étant réalisé en discontinu sur un matériau de support continu (2), **caractérisé en ce que** le matériau de brasage (3) est réalisé au moins partiellement comme feuille de brasage et qu'en outre la matériau de brasage (3) est fixé sur le matériau de support (2) à l'aide d'un premier adhésif (4) et est doté d'un deuxième adhésif (5) sur un coté détourné du matériau de support (2).

2. Matériau de liaison (1) selon la revendication 1, **caractérisé en ce que** le matériau de brasage (3) est réalisé au moins partiellement en forme de métal d'apport en grains.

3. Matériau de liaison (1) selon la revendication 1, **caractérisé en ce qu'**une première force adhésive, causée par le premier adhésif (4), est plus grande qu'une deuxième force adhésive causée par le deuxième adhésif (5).

4. Matériau de liaison (1) selon l'une des revendications précédentes, **caractérisé en ce qu'**un troisième adhésif (6) est réalisé sur un coté du matériau de support (2) détourné du matériau de brasage (3).

5. Matériau de liaison (1) selon l'une des revendications précédentes, **caractérisé en ce que** le matériau de support (2) est réalisé d'un métal, d'une matière plastique et/ou de papier, de préférence d'une matière plastique et/ou de papier.

6. Matériau de liaison (1) selon l'une des revendications précédentes, **caractérisé en ce que** le matériau de support (2) a une température critique, le dépassement de laquelle détruit le matériau de support (2) qui est inférieure à ou est égale à une température de fusion du matériau de brasage (3).

7. Matériau de liaison (1) selon la revendication 6, **caractérisé en ce que** lorsqu'il atteint au moins la température critique le matériau de support (2) s'évapore au moins partiellement, c'est-à-dire se décompose au moins partiellement, s'évapore de préférence sensiblement de manière à être exempt de résidus, c'est à dire se décompose sensiblement de manière à être exempt de résidus.

8. Procédé destiné à la fabrication d'un corps en nids d'abeilles (19) avec une structure en nids d'abeilles (20) avec des cavités (22) à travers lesquelles un fluide peut s'écouler au moins partiellement, comprenant au moins les étapes suivantes :
A) La mise à disposition d'au moins une couche au moins partiellement métallique (7, 17) ;
B) Le Positionnement de matériau de brasage (3) au moins sur des zones de liaison (18) d'au moins une des couches (7, 17) ;
C) La réalisation de la structure en nids d'abeilles (20) de l'au moins une couche (7, 17) ;
D) Le cas échéant, la mise à disposition d'un tube d'enveloppe (21) ;
E) Le cas échéant, le positionnement de matériau de brasage (3) au moins sur une zone d'attache (23) d'une surface extérieure de la structure en nids d'abeilles (20) et/ou d'une surface intérieure du tube d'enveloppe (21) ;
F) Le cas échéant, introduction de la structure en nids d'abeilles (20) dans le tube d'enveloppe (21) ;
G) La mise en oeuvre d'un processus de brasage,
**caractérisé en ce que** dans l'étape de procédé B) et/ou E) le matériau de brasage (3) est positionné au moins partiellement en forme d'un matériau de liaison (1) selon l'une des revendications 1 à 7.

9. Procédé selon la revendication 8, **caractérisé en ce que** la feuille de brasage est mise à longueur des dimensions de la zone de liaison (18) avant ou lors de l'étape de procédé B).

10. Procédé selon l'une des revendications 8 ou 9, **caractérisé en ce qu'**au moins une couche au moins partiellement structurée (17) est mise à disposition dans l'étape de procédé A).

11. Procédé selon l'une des revendications 8 à 10, **caractérisé en ce que** dans l'étape de procédé A) au moins une couche (7) sensiblement lisse est mise à disposition.

12. Procédé selon la revendication 10 ou 11, dans lequel une structuration de la couche au moins partiellement structurée (17) a un écart caractéristique de deux extrema de structure adjacents (27), notamment une longueur d'onde (25) en direction transversale (24) de la structuration, **caractérisé en ce qu'**au moins une partie des zones de liaison (18, 29, 31) ont en direction transversale (24) de la structuration une étendue (26) qui est plus grande que l'écart caractéristique (25).

13. Procédé selon la revendication 12, **caractérisé en ce que** le quotient de l'écart caractéristique (25) et de l'étendue (26) comprend sensiblement entre 1,2 et sensiblement 5, de préférence entre sensiblement 1,5 et sensiblement 3, plus préférablement entre sensiblement 1,8 et sensiblement 2,5.

14. Procédé selon l'une des revendications 8 à 13, **caractérisé en ce que** le matériau de liaison (1) est rapporté sur une couche (7) sensiblement lisse.

15. Procédé selon l'une des revendications 8 à 14, **caractérisé en ce que** le matériau de liaison (1) est rapporté sur une couche au moins structurée partiellement (17).

16. Procédé selon l'une des revendications 8 à 15, **caractérisé en ce que** les dimensions du matériau de support (2) correspondent sensiblement au moins partiellement aux dimensions d'au moins une des couches (7, 17).

17. Procédé selon l'une des revendications 8 à 16, **caractérisé en ce que** le matériau de liaison (1) est fixé dans l'étape de procédé B) sur la couche (7,17) et/ou dans l'étape de procédé E) sur la surface extérieure de la structure en nids d'abeilles (20) et/ou sur la surface intérieure du tube d'enveloppe (21).

18. Procédé selon l'une des revendications 8 à 17, **caractérisé en ce qu'**un adhésif (6) est appliqué sur le matériau de support (2) avant ou durant l'étape de procédé B) ou E).

19. Procédé selon l'une des revendications 8 à 18, **caractérisé en ce que** des zones de liaison (18, 29, 31) sont formées sur une couche (7, 17) sur les deux cotés longitudinaux (28, 30), la couche (7, 17) ne disposant sur une coordonnée respectivement que sur un coté longitudinal (28, 30) d'une zone de liaison (18, 29, 31).

20. Procédé selon la revendication 19, **caractérisé en ce que** les zones de liaison (18, 29, 31) sont réalisées de façon telle, que dans une direction longitudinale (32) du corps en nids d'abeilles (19) au moins deux régions partielles (33, 34, 35) sont formées, dans lesquelles des zones de liaison (18, 29, 31) sont formées, une couche (7, 17) n'ayant sur un coté longitudinal (28, 30) que des zones de liaison (18, 29, 31) dans une région partielle (33, 34, 35).

21. Procédé selon la revendication 20, **caractérisé en ce que** respectivement une région partielle (33, 34) est réalisée dans la région d'une face frontale du corps en nids d'abeilles (19) ou adjacente de celle-ci.

22. Procédé selon la revendication 20 ou 21, **caractérisé en ce qu'**une troisième région partielle (35) est réalisée sensiblement en direction longitudinale (32), de manière centrale dans le corps en nids d'abeilles (19).
